# FASCICULE DE BREVET EUROPEEN

(11) **EP 2 307 489 B1**
(45) Date de publication et mention de la délivrance du brevet: **25.03.2015**
(21) Numéro de dépôt: 09777296.6
(22) Date de dépôt: 20.07.2009
(51) Int. Cl.: C08K 3/06, C08K 3/04, C08K 5/31, C08L 7/00, C08L 9/00, C08J 3/22, C08J 3/20, C08J 3/24, C08L 97/00, B29C 73/16, C08L 25/04, C09K 3/10, B29L 30/00, B60C 5/14, C08L 21/00, C08L 45/00, C08L 101/00

(54) **PROCEDE DE FABRICATION D'UNE COMPOSITION AUTO-OBTURANTE**
VERFAHREN ZUR HERSTELLUNG EINER SELBSTHEILENDEN ZUSAMMENSETZUNG
METHOD FOR MAKING A SELF-SEALING COMPOSITION

(30) Priorité: 24.07.2008 FR 0855040
(43) Date de publication de la demande: 13.04.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: PIALOT, Frédéric, F-63190 Moissat (FR); FOMBELLE, Damien, F-63720 Chappes (FR); VOGE, Bozena, F-63800 Cournon d'Auvergne (FR); MERINO LOPEZ, José, F-63200 Riom (FR)
(74) Mandataire: Ribière, Joel
(86) Numéro de dépôt international: PCT/EP2009/005244
(87) Numéro de publication internationale: WO 2010/009851

(56) Documents cités:
- EP-A- 0 161 201
- WO-A-01/85837
- FR-A- 2 866 028
- FR-A- 2 877 348
- US-A- 4 616 048
- US-A- 5 914 364
- US-A1- 2002 115 767
- US-A1- 2007 161 735
- ANOMYME: "Material safety datasheet: Sundex 8125" , [Online] 28 août 2006 (2006-08-28), pages 1-5, XP002515554 Extrait de l'Internet: URL:http://www.recarroll.com/cw3/Assets/pr oduct_files/Sundex%208125TN.pdf> [extrait le 2009-02-17]
- J. C. MITCHELL: "The melting point of cis-1,4-polybutadiene" JOURNAL OF POLYMER SCIENCE PART B: POLYMER LETTERS, [Online] vol. 1, no. 6, 1963, pages 285-288, XP002515576 Extrait de l'Internet: URL:http://dx.doi.org/10.1002/pol.1963.110 010604> [extrait le 2009-02-17]

## Description

La présente invention est relative aux compositions auto-obturantes (*self-sealing*) utilisables comme couches anti-crevaison dans tout type d'objet « pneumatique », c'est-à-dire, par définition, tout objet qui prend sa forme utilisable quand on le gonfle d'air.

Elle se rapporte plus particulièrement aux procédés de fabrication de compositions auto-obturantes à base d'élastomère diénique tel que du caoutchouc naturel.

Depuis quelques années, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont certes été imaginées mais elles n'ont pas vraiment pu se développer jusqu'ici dans les bandages pneumatiques pour véhicules, particulièrement en raison de difficultés de fabrication de ces compositions auto-obturantes et donc de leur coût de revient final.

En particulier, des compositions auto-obturantes performantes, à base de caoutchouc naturel et de résine hydrocarbonée à titre d'agent tackifiant (*"tackifier"*), ont été décrites dans les brevets US 4 913 209, US 5 085 942 et US 5 295 525. Ces compositions se caractérisent par la présence combinée d'un taux élevé de résine hydrocarbonée, toujours supérieur à 100 pce, et d'une quantité importante d'élastomère à l'état liquide, généralement sous la forme de caoutchouc naturel dépolymérisé (poids moléculaire typiquement compris entre 1 000 et 100 000).

Tout d'abord, un taux aussi élevé de résine, outre le fait qu'il peut être préjudiciable à l'hystérèse et en conséquence à la résistance au roulement des bandages pneumatiques, nécessite un malaxage particulièrement long et difficile de la matrice élastomérique. L'utilisation d'une quantité importante d'élastomère liquide améliore certes la fluidité de la composition, mais une telle utilisation est source d'autres inconvénients, notamment d'un risque de fluage de la composition auto-obturante lors d'une utilisation à température relativement élevée (typiquement supérieure à 60°C) fréquemment rencontrée lors de l'utilisation de certains bandages pneumatiques.

Si l'on réduit le taux d'élastomère liquide ou si l'on supprime complètement ce dernier, un autre problème majeur de fabrication peut alors se poser : en l'absence de charge telle que du noir de carbone, ou tout au moins d'une quantité notable d'une telle charge (par ailleurs non souhaitable, de manière connue, pour ce type d'application), la composition est faiblement cohésive. Ce manque de cohésion peut être tel que le pouvoir collant de la composition, résultant du taux élevé de résine tackifiante employé, n'est plus compensé et l'emporte. Il s'ensuit alors un risque de collage parasite sur les outils de mélangeage, rédhibitoire dans des conditions de mise en oeuvre industrielle.

D'autres documents décrivent des compositions auto-obturantes comprenant une huile de type élastomère liquide. Par exemple, le document US 4 616 048 décrit une composition auto-obturante comprenant un caoutchouc EPDM (éthylène-propylène-diène monomère) et une huile de polybutène liquide. Le document EP 161201 quant à lui, décrit une composition auto-obturante comprenant un caoutchouc butyl, une huile de polybutène liquide et une charge (90 pce de kaolin ou de noir de carbone).

Par ailleurs, dans d'autres domaines que les compositions auto-obturantes, d'autres documents décrivent des compositions, notamment de bande de roulement de pneumatique, comprenant des résines thermoplastiques, par exemple les documents US 2002/0115767, US 5 914 364, FR 2 866 028, ou FR 2 877 348. Dans un autre domaine également, le document WO 2001/85837 décrit une composition imperméable comprenant un élastomère isobutylénique, un copolymère semi-cristallin et une faible quantité de résine phénolique (4 pce).

Poursuivant leurs recherches, les Demanderesses ont découvert un procédé de fabrication nouveau qui permet de pallier, tout au moins diminuer de manière importante, les différents inconvénients précités.

En conséquence, la présente invention concerne un procédé de fabrication d'une composition d'élastomère auto-obturante, ledit procédé comportant au moins les étapes suivantes (pce signifiant parties en poids pour cent parties d'élastomère solide):
a) on fabrique dans un premier temps un masterbatch comportant au moins un élastomère diénique solide choisi dans le groupe constitué par les polybutadiènes, le caoutchouc naturel, les polyisoprènes de synthèse, les copolymères de butadiènes, les copolymères d'isoprène et les mélanges de tels élastomères, et entre 30 et 90 pce d'une résine hydrocarbonée thermoplastique solide à 23°C, en mélangeant ces différents composants dans un mélangeur à une température ou jusqu'à une température dite "de mélangeage à chaud" qui est supérieure à la température de ramollissement de la résine hydrocarbonée, mesurée selon la norme ISO 4625;
b) puis on incorpore au masterbatch ainsi préparé au moins un système de réticulation, en mélangeant le tout, dans le même mélangeur ou dans un mélangeur différent, à une température ou jusqu'à une température qui est maintenue inférieure à 100°C, pour l'obtention de ladite composition auto-obturante ; c) en présence de 0 à moins de 30 pce de charge, une telle charge optionnelle étant introduite au cours de l'étape (a) ou de l'étape (b).

Un tel procédé s'est avéré particulièrement bien adapté à la fabrication rapide, dans des conditions de mise en oeuvre acceptables du point de vue industriel, d'une composition auto-obturante performante à base d'élastomère diénique et de résine hydrocarbonée, cette composition pouvant comporter des taux élevés de résine hydrocarbonée sans nécessiter l'emploi d'élastomère à l'état liquide.

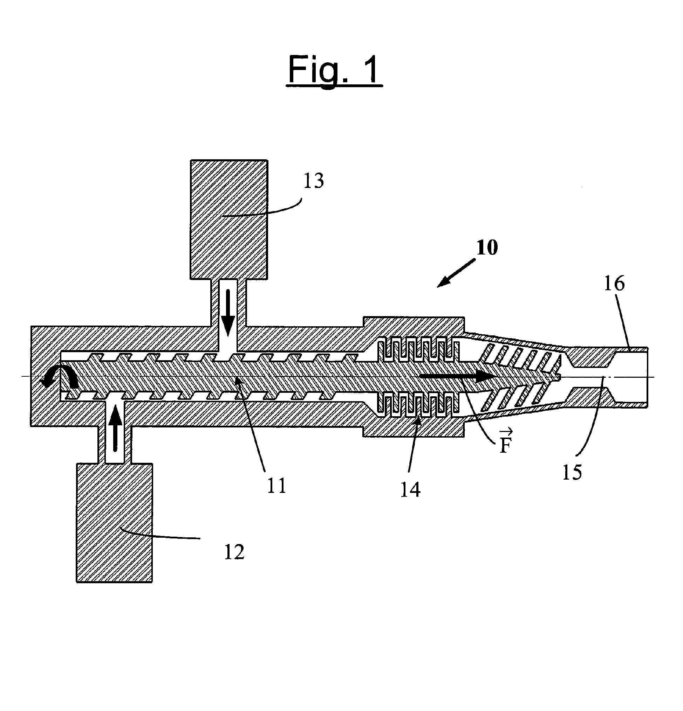

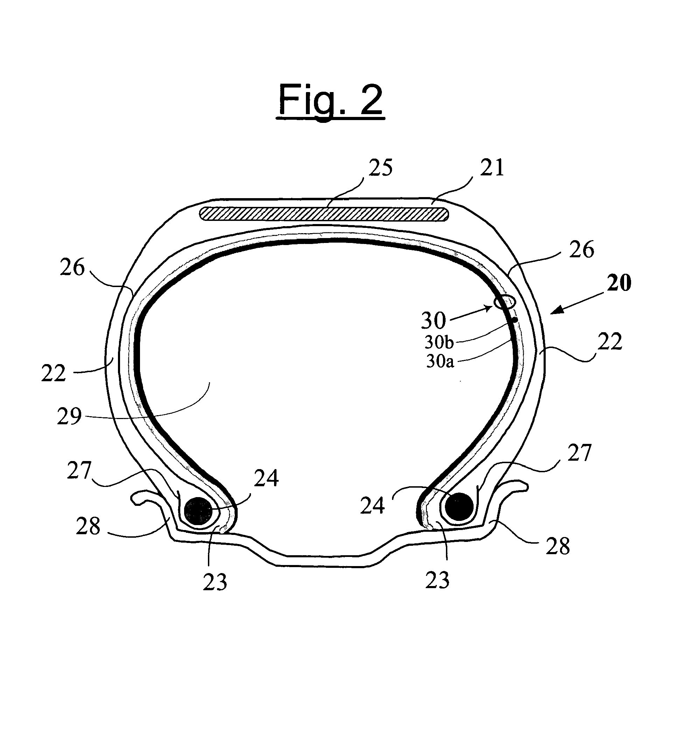

L'invention ainsi que ses avantages seront aisément compris à la lumière de la description et des exemples de réalisation qui suivent, ainsi que des figures 1 et 2 relatives à ces exemples qui schématisent de manière simple, sans respect d'une échelle spécifique :
- un exemple de dispositif d'extrusion-mélangeage utilisable pour la mise en oeuvre d'un procédé conforme à l'invention (Fig. 1) ;
- en coupe radiale, un exemple de bandage pneumatique utilisant une composition auto-obturante préparée selon le procédé conforme à l'invention (Fig. 2).

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de la borne "a" jusqu'à la borne "b" c'est-à-dire incluant les bornes strictes "a" et "b".

### I-1. Procédé de l'invention

Le procédé conforme à l'invention a donc pour étapes essentielles les étapes suivantes (pce signifiant parties en poids pour cent parties d'élastomère solide):
a) on fabrique dans un premier temps un masterbatch comportant au moins un élastomère diénique solide choisi dans le groupe constitué par les polybutadiènes, le caoutchouc naturel, les polyisoprènes de synthèse, les copolymères de butadiènes, les copolymères d'isoprène et les mélanges de tels élastomères, et entre 30 et 90 pce d'une résine hydrocarbonée thermoplastique solide à 23°C, en mélangeant ces différents composants dans un mélangeur à une température ou jusqu'à une température dite "de mélangeage à chaud" qui est supérieure à la température de ramollissement de la résine hydrocarbonée, mesurée selon la norme ISO 4625 ; b) puis on incorpore au masterbatch ainsi préparé au moins un système de réticulation, en mélangeant le tout, dans le même mélangeur ou dans un mélangeur différent, à une température ou jusqu'à une température qui est maintenue inférieure à 100°C, pour l'obtention de ladite composition auto-obturante ; c) en présence de 0 à moins de 30 pce de charge, une telle charge optionnelle étant introduite au cours de l'étape (a) ou de l'étape (b).

Les première et seconde températures ci-dessus sont bien entendu celles du masterbatch et de la composition auto-obturante, respectivement, mesurables in situ et non pas les températures de consigne des mélangeurs eux-mêmes.

Par "masterbatch" (ou "mélange-maître") doit être entendu ici, par définition, le mélange d'au moins un élastomère diénique et plus de 30 pce de la résine hydrocarbonée, mélange précurseur de la composition auto-obturante finale, prête à l'emploi.

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Le masterbatch peut être fabriqué dans tout outil de mélangeage, notamment dans un mélangeur à palette, un mélangeur à cylindres, une boudineuse, tout mélangeur capable de mélanger, malaxer ses différents composants suffisamment jusqu'à l'obtention d'un mélange intime homogène desdits composants. De préférence, on utilise un mélangeur-extrudeur à vis, à pas constant ou non, apte de manière connue à introduire un cisaillement important du mélange (élastomère diénique et résine) en cours de formation.

A l'état initial, c'est-à-dire avant son contact avec l'élastomère, la résine hydrocarbonée peut se présenter à l'état solide ou à l'état liquide. Lors de la mise en contact de l'élastomère diénique (solide) et de la résine hydrocarbonée, cette dernière peut se trouver à l'état solide ou, selon un mode de réalisation plus préférentiel, déjà à l'état liquide ; il suffit pour cela de chauffer la résine à une température supérieure à sa température de ramollissement.

Selon le type de résine hydrocarbonée utilisée, la température maximale (ou première température) de mélangeage à chaud est typiquement supérieure à 70°C, de préférence supérieure à 80°C, par exemple comprise entre 100°C et 150°C.

Pour un mélangeage optimal du masterbatch, la résine hydrocarbonée est préférentiellement injectée à l'état liquide, sous pression, dans le mélangeur. Selon un autre mode de réalisation préférentiel, combiné ou non au précédent, l'étape a) de mélangeage à chaud est conduite à l'abri de l'oxygène.

L'étape b) d'incorporation du système de réticulation est quant à elle conduite à une température ou jusqu'à une température maximale (ou seconde température) qui est maintenue inférieure à 100°C, préférentiellement inférieure à 80°C.

Selon un autre mode préférentiel de l'invention, la seconde température est maintenue inférieure à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) décrites ci-dessus peut être intercalée si nécessaire une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

### I-2. Formulation de la composition auto-obturante

La composition ou matière auto-obturante susceptible d'être préparée selon le procédé de l'invention est donc une composition élastomère comportant au moins un élastomère diénique, plus de 30 pce d'une résine hydrocarbonée et un système de réticulation ; outre divers additifs éventuels, elle peut comporter ou non une faible fraction de charge renforçante. Sa formulation est décrite plus en détail ci-après.

### a) Elastomère diénique

Les élastomères diéniques, de manière connue, peuvent être classés dans deux catégories, saturés ou insaturés. On utilise préférentiellement ici un élastomère diénique du type insaturé, c'est-à-dire par définition un élastomère diénique issu au moins en partie de monomères diènes conjugués et ayant un taux de motifs ou unités issus de diènes conjugués qui est supérieur à 30% (% en moles). Par opposition à des élastomères diéniques du type liquides, l'élastomère diénique de la composition de l'invention est par définition solide. Typiquement, sa masse moléculaire moyenne en nombre (Mn) est comprise entre 100 000 et 5 000 000, plus particulièrement entre 200 000 et 4 000 000 g/mol.

L'élastomère diénique est choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène et les mélanges de tels élastomères.

Plus préférentiellement encore, l'élastomère diénique (de préférence insaturé) de la composition de l'invention est un élastomère isoprénique, préférentiellement choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères. Cet élastomère isoprénique est de préférence du caoutchouc naturel ou un polyisoprène cis-1,4 de synthèse.

L'élastomère diénique (de préférence insaturé) ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition de l'invention, le taux d'élastomère diénique (de préférence insaturé), notamment d'élastomère isoprénique tel que caoutchouc naturel, est supérieur à 50 pce, plus préférentiellement supérieur à 70 pce (pce signifiant de manière connue parties en poids pour cent parties d'élastomère solide). Plus préférentiellement encore, ce taux d'élastomère diénique (de préférence insaturé), notamment d'élastomère isoprénique tel que caoutchouc naturel, est supérieur à 80 pce.

Selon un mode de réalisation particulier, l'élastomère diénique ci-dessus, notamment lorsqu'il s'agit d'un élastomère diénique isoprénique tel que du caoutchouc naturel, est le seul élastomère présent dans la composition auto-obturante de l'invention. Toutefois, selon d'autres modes de réalisation possibles, cet élastomère isoprénique pourrait être associé à d'autres élastomères (solides) minoritaires en poids, qu'il s'agisse d'élastomères diéniques insaturés (par exemple BR ou SBR) voire même saturés (par exemple butyl), ou encore d'élastomères autres que diéniques, notamment des élastomères thermoplastiques styréniques (dits "TPS"), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

### b) Résine hydrocarbonée

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de l'invention, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition. Au-delà de 90 pce, on s'expose à une tenue mécanique insuffisante du matériau avec en outre un risque de performance dégradée à haute température (typiquement supérieure à 70°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de l'invention, la résine hydrocarbonée présente au moins une quelconque, plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une quelconque, plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Ball"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C₅/ styrène ou résines coupe C₅/ coupe C₉, ou encore par la société Struktol sous dénomination "40 MS" ou "40 NS" ou par la société Exxon Mobil sous dénomination "Escorez" (mélanges de résines aromatiques et/ou aliphatiques).

### c) Système de réticulation

La composition auto-obturante comporte en outre un système de réticulation de l'élastomère diénique, ce système de réticulation étant préférentiellement un système de réticulation à base de soufre, en d'autres termes un système dit "de vulcanisation".

Le système de vulcanisation à base de soufre comporte de préférence, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG.

Dans ce système de vulcanisation, pour une performance d'auto-obturation optimale, le taux de soufre est de préférence compris entre 0,1 et 1,5 pce, en particulier entre 0,2 et 1,2 pce (par exemple entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit système ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce. Si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc.

Selon un autre mode de réalisation avantageux, le système de vulcanisation ci-dessus peut être dépourvu de zinc ou d'oxyde de zinc (connus comme activateurs de vulcanisation).

Selon un autre mode de réalisation possible de l'invention, on peut aussi utiliser un donneur de soufre en lieu et place du soufre lui-même ; les donneurs de soufre sont bien connus de l'homme du métier. Typiquement, la quantité d'un tel donneur de soufre sera de préférence ajustée entre 0,5 et 10 pce, plus préférentiellement entre 1 et 5 pce, de manière à atteindre les taux de soufre équivalents préférentiels indiqués précédemment (à savoir entre 0,1 et 1,5 pce, en particulier entre 0,2 et 1,2 pce de soufre).

Après cuisson, un système de vulcanisation tel que décrit ci-dessus apporte une cohésion suffisante à la composition, sans lui conférer une vulcanisation véritable : la réticulation mesurable, via une méthode de gonflement classique connue de l'homme du métier, avoisine en fait le seuil de détection.

### d) Charge

La composition préparée selon le procédé de l'invention a pour autre caractéristique d'être non chargée ou très faiblement chargée, c'est-à-dire de comporter de 0 à moins de 30 pce de charge.

Par charge, on entend ici tout type de charge, qu'elle soit renforçante (typiquement à particules nanométriques, de taille moyenne en poids préférentiellement inférieure à 500 nm, notamment entre 20 et 200 nm) ou qu'elle soit non-renforçante ou inerte (typiquement à particules micrométriques, de taille moyenne en poids supérieure à 1 µm, par exemple entre 2 et 200 µm).

Ces charges, renforçantes ou pas, sont essentiellement là que pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère isoprénique tel que du caoutchouc naturel.

Une quantité trop élevée, notamment supérieure à 30 pce ne permet plus d'atteindre les propriétés minimales requises de souplesse, de déformabilité et d'aptitude au fluage. Pour ces raisons, la composition auto-obturante comporte préférentiellement 0 à moins de 20 pce, plus préférentiellement 0 à moins de 10 pce de charge.

A titre d'exemples de charges connues comme renforçantes par l'homme du métier, on citera notamment des nanoparticules de noir de carbone ou d'une charge inorganique renforçante, ou un coupage de ces deux types de charge. Comme noirs de carbone, par exemple, conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

A titre d'exemples de charges connues comme non-renforçantes ou inertes par l'homme du métier, on citera notamment des microparticules de carbonates de calcium naturels (craie) ou synthétiques, de silicates synthétiques ou naturels (tels que kaolin, talc, mica), de silices broyées, oxydes de titane, alumines ou encore aluminosilicates. A titre d'exemples de charges lamellaires, on peut citer également des particules de graphite. Des charges colorantes ou colorées pourront être avantageusement utilisées pour colorer la composition selon la couleur désirée.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

L'homme de l'art saura, à la lumière de la présente description, ajuster la formulation de la composition auto-obturante afin d'atteindre les niveaux de propriétés souhaités et adapter la formulation à l'application spécifique envisagée.

Selon un mode de réalisation particulier et avantageux de l'invention, si une charge renforçante est présente dans la composition auto-obturante, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de l'invention, tout en offrant d'excellentes propriétés auto-obturantes à la composition. On utilise plus préférentiellement un taux compris entre 0,5 et 2 pce, en particulier lorsqu'il s'agit de noir de carbone.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

### e) Autres additifs possibles

Les constituants de base précédemment décrits sont suffisants à eux seuls pour que la composition auto-obturante remplisse totalement sa fonction anti-crevaison vis-à-vis des objets pneumatiques dans lesquels elle est utilisée. Toutefois, divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante. Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

### II. EXEMPLE DE REALISATION DE L'INVENTION

### II-1. Fabrication de la composition auto-obturante

A titre d'exemple, l'étape a) de fabrication du masterbatch est réalisée de préférence dans un mélangeur-extrudeur à vis tel que schématisé de manière simple à la figure 1.

On voit sur cette figure 1 un mélangeur-extrudeur à vis (10) comportant essentiellement une vis (par exemple une mono-vis) d'extrusion (11), une première pompe de dosage (12) pour l'élastomère diénique (solide) et une deuxième pompe de dosage (13) pour la résine. Les pompes de dosages (12, 13) permettent de monter en pression tout en conservant la maîtrise du dosage et les caractéristiques initiales des matériaux, la dissociation des fonctions de dosages (élastomère et résine) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie (14) dite "hacheur-homogénéisateur", zone à la sortie de laquelle le masterbatch final (15) ainsi obtenu, progressant dans le sens de la flèche (F), est finalement extrudé à travers une filière (16) permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion (10) pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer une composition auto-obturante dans des conditions industrielles satisfaisantes, sans risque de pollution des outils due à un collage parasite de la composition sur les parois des mélangeurs.

### II-2. Utilisation de la composition auto-obturante comme couche anti-crevaison

La composition ou matière auto-obturante préparée selon le procédé de l'invention est un composé solide et élastique, qui se caractérise notamment, grâce à sa formulation spécifique, par une très grande souplesse et haute déformabilité. Elle peut être utilisée comme couche anti-crevaison dans tout type d'objet "pneumatique", c'est-à-dire, par définition, tout objet qui prend sa forme utilisable quand on le gonfle d'air. A titre d'exemples de tels objets pneumatiques, on peut citer les bateaux pneumatiques, les ballons ou balles utilisées pour le jeu ou le sport.

Elle est particulièrement bien adaptée à une utilisation comme couche anti-crevaison dans un objet pneumatique, produit fini ou semi-fini, en caoutchouc, notamment dans des bandages pneumatiques pour véhicule automobile tel que véhicules du type deux roues, tourisme ou industriel, ou non automobile tel que vélo, plus particulièrement dans les bandages pour véhicules tourisme susceptibles de rouler à très haute vitesse ou les bandages pour véhicules industriels tels que poids-lourd susceptibles de rouler et fonctionner sous des conditions de températures internes particulièrement élevées.

Une telle couche anti-crevaison est préférentiellement disposée sur la paroi interne de l'objet pneumatique, la recouvrant totalement ou au moins en partie, mais elle peut être également intégrée complètement à sa structure interne.

La composition auto-obturante ici décrite a l'avantage de ne présenter, dans une très large gamme de températures d'utilisation des bandages pneumatiques, pratiquement aucune pénalisation en termes de résistance au roulement par rapport à un bandage pneumatique ne comportant pas une telle couche auto-obturante. En outre, comparativement aux compositions auto-obturantes usuelles, sont notablement réduits les risques d'un fluage excessif lors d'une utilisation à température relativement élevée (typiquement supérieure à 60°C), fréquemment rencontrée lors de l'utilisation de certains bandages pneumatiques.

A titre d'exemple, la figure 2 annexée représente de manière très schématique (sans respect d'une échelle spécifique), une coupe radiale d'un bandage pneumatique conforme à l'invention.

Ce bandage pneumatique 20 comporte un sommet 21 renforcé par une armature de sommet ou ceinture 25, deux flancs 22 et deux bourrelets 23, chacun de ces bourrelets 23 étant renforcé avec une tringle 24. Le sommet 21 est surmonté d'une bande de roulement non représentée sur cette figure schématique. Une armature de carcasse 26 est enroulée autour des deux tringles 24 dans chaque bourrelet 23, le retournement 27 de cette armature 26 étant par exemple disposé vers l'extérieur du pneumatique 20 qui est ici représenté monté sur sa jante 28. L'armature de carcasse 26 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 23 et passe par le milieu de l'armature de sommet 25).

Le bandage pneumatique 20 est caractérisé en ce que sa paroi interne comporte un stratifié multi-couches (30) comportant deux couches (30a, 30b), auto-obturant grâce à sa première couche (30a) et étanche à l'air grâce à sa seconde couche (30b), par exemple à base de caoutchouc butyl. Les deux couches (30a, 30b) couvrent substantiellement toute la paroi interne du bandage pneumatique, se prolongeant d'un flanc à l'autre, au moins jusqu'au niveau du crochet de jante lorsque le bandage pneumatique est en position montée. Le stratifié est ici disposé de telle manière que la première couche (30a) auto-obturante soit radialement la plus externe dans le bandage pneumatique, par rapport à l'autre couche (30b). En d'autres termes, la couche (30a) auto-obturante recouvre la couche (30b) étanche à l'air du côté de la cavité interne 29 du bandage pneumatique 20.

Dans cet exemple, la couche 30b (d'épaisseur 0,7 à 0,8 mm) est à base de caoutchouc butyl, présente une formulation conventionnelle pour une "gomme intérieure" (*"inner liner"*) qui définit usuellement, dans un bandage pneumatique conventionnel, la face radialement interne dudit bandage destinée à protéger l'armature de carcasse de la diffusion d'air provenant de l'espace intérieur au bandage. Cette couche 30b étanche à l'air permet donc le gonflement et le maintien sous pression du bandage 20 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois. La couche 30a est quant à elle constituée d'une composition auto-obturante préparée selon le procédé conforme à l'invention, comportant les deux constituants essentiels que sont du caoutchouc naturel (100 pce) et une résine hydrocarbonée "Escorez 2101" de la société Exxon Mobil (point de ramollissement égal à environ 90°C) à un taux pondéral d'environ 50 pce.

Plus précisément, la composition auto-obturante ci-dessus a été préparée à l'aide d'une extrudeuse mono-vis (L/D = 40) telle que schématisée à la figure 1 (déjà commentée précédemment) ; le mélange des deux constituants de base (NR et résine) a été réalisé à une température (comprise entre 100 et 130°C) supérieure à la température de ramollissement de la résine. L'extrudeuse utilisée comportait deux alimentations (trémies) différentes (NR d'une part, résine d'autre part) et une pompe d'injection liquide sous pression pour la résine (injectée à une température de 130°C environ) ; quand l'élastomère et la résine sont ainsi intimement mélangés, on a constaté que le pouvoir collant parasite de la composition diminuait de manière très significative.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (N772, à un taux de 1 pce), à basse température maintenue à une valeur inférieure à +30°C (refroidissement des cylindres par circulation d'eau).

La couche 30a, disposée donc entre la couche 30b et la cavité 29 du pneumatique, permet de procurer au pneumatique une protection efficace contre les pertes de pression dues aux perforations accidentelles, en permettant l'obturation automatique de ces perforations.

Lors d'essais, des bandages pneumatiques de type tourisme, de dimension 205/55 R16 "marque Michelin, Energy 3" ont été testés. La paroi interne des pneumatiques (comportant déjà la couche étanche à l'air 30b) a été recouverte par la couche auto-obturante (30a) précédemment décrite, d'une épaisseur de 3 mm, puis les pneumatiques vulcanisés.

Sur un des bandages pneumatiques monté et gonflé, cinq perforations de 5 mm de diamètre ont été réalisées, à travers la bande de roulement et le bloc sommet d'une part, les flancs d'autre part, à l'aide de poinçons qui ont été immédiatement retirés.

De manière inattendue, ce bandage a résisté à un roulage sur volant à 150 km/h, sous une charge nominale de 400 kg, sans perte de pression pendant plus de 1 500 km, distance au-delà de laquelle le roulage a été stoppé.

Sur un autre bandage pneumatique, on a procédé de la même façon en laissant cette fois en place les objets perforants, pendant une semaine. Le même excellent résultat a été obtenu.

Sans composition auto-obturante et dans les mêmes conditions que ci-dessus, le bandage pneumatique ainsi perforé perd sa pression en moins d'une minute, devenant totalement inapte au roulage.

## Revendications

1. Procédé de fabrication d'une composition d'élastomère auto-obturante, ledit procédé comportant les étapes suivantes (pce signifiant parties en poids pour cent parties d'élastomère solide):
a) on fabrique dans un premier temps un masterbatch comportant au moins un élastomère diénique solide choisi dans le groupe constitué par les polybutadiènes, le caoutchouc naturel, les polyisoprènes de synthèse, les copolymères de butadiènes, les copolymères d'isoprène et les mélanges de tels élastomères, et entre 30 et 90 pce d'une résine hydrocarbonée thermoplastique solide à 23°C, en mélangeant ces différents composants dans un mélangeur à une température ou jusqu'à une température dite "de mélangeage à chaud" qui est supérieure à la température de ramollissement de la résine hydrocarbonée, mesurée selon la norme ISO 4625 ;
b) puis on incorpore au masterbatch ainsi préparé au moins un système de réticulation, en mélangeant le tout, dans le même mélangeur ou dans un mélangeur différent, à une température ou jusqu'à une température qui est maintenue inférieure à 100°C, pour l'obtention de ladite composition auto-obturante ;
c) en présence de 0 à moins de 30 pce de charge, une telle charge optionnelle étant introduite au cours de l'étape (a) ou de l'étape (b).

2. Procédé selon la revendication 1, dans lequel, au cours de l'étape a) de mélangeage à chaud, l'élastomère diénique est mis au contact de la résine hydrocarbonée à l'état solide.

3. Procédé selon la revendication 1, dans lequel, au cours de l'étape a) de mélangeage à chaud, l'élastomère diénique est mis au contact de la résine hydrocarbonée à l'état liquide.

4. Procédé selon la revendication 3, dans lequel la résine hydrocarbonée est injectée à l'état liquide dans le mélangeur.

5. Procédé selon l'une quelconque des revendications 1 à 4, dans lequel l'étape a) de mélangeage à chaud de l'élastomère diénique avec la résine hydrocarbonée est conduite à l'abri de l'oxygène.

6. Procédé selon l'une quelconque des revendications 1 à 5, dans lequel la température de mélangeage à chaud est supérieure à 70°C, de préférence supérieure à 80°C.

7. Procédé selon l'une quelconque des revendications 1 à 6, dans lequel l'étape a) de mélangeage à chaud est réalisée dans un mélangeur-extrudeur à vis.

8. Procédé selon l'une quelconque des revendications 1 à 7, dans lequel la température de mélangeage de l'étape b) est maintenue inférieure à 80°C.

9. Procédé selon l'une quelconque des revendications 1 à 8, dans lequel la température de mélangeage de l'étape b) est maintenue inférieure à la température de ramollissement de la résine hydrocarbonée.

10. Procédé selon l'une quelconque des revendications 1 à 9, dans lequel la température de mélangeage de l'étape b) est maintenue inférieure à 50°C, de préférence inférieure à 40°C.

11. Procédé selon l'une quelconque des revendications 1 à 10, dans lequel l'étape b) de mélangeage est réalisée sur un mélangeur externe à cylindres.

12. Procédé selon la revendication 11, dans lequel les cylindres du mélangeur externe sont refroidis à une température inférieure à 40°C, de préférence inférieure à 30°C.

13. Procédé selon l'une quelconque des revendications 1 à 12, dans lequel est intercalée entre les étapes a) et b) une étape intermédiaire de refroidissement du masterbatch afin de refroidir ce dernier à une température inférieure à 100°C.

14. Procédé selon la revendication 13, dans lequel la température de refroidissement du masterbatch au cours de ladite étape intermédiaire de refroidissement est inférieure à 80°C.

15. Procédé selon la revendication 13 ou 14, dans lequel la température de refroidissement du masterbatch au cours de ladite étape intermédiaire de refroidissement est inférieure à la température de ramollissement de la résine hydrocarbonée.

## Patentansprüche

1. Verfahren zur Herstellung einer selbstdichtenden Elastomerzusammensetzung, wobei das Verfahren die folgenden Schritte aufweist (wobei pce "Gewichtsteile pro hundert Teile festes Elastomer" bedeutet):
a) in einer ersten Phase wird ein Masterbatch hergestellt, welches mindestens ein festes Dienelastomer, das aus der Gruppe ausgewählt ist, die aus den Polybutadienen, Naturkautschuk, den Synthesepolyisoprenen, den Copolymeren von Butadienen, den Copolymeren von Isopren und den Mischungen solcher Elastomere besteht, und zwischen 30 und 90 pce eines bei 23 °C festen thermoplastischen kohlenwasserstoffhaltigen Harzes aufweist, indem diese verschiedenen Komponenten in einem Mischer bei einer Temperatur oder bis zu einer Temperatur, die als "Warmmisch"-Temperatur bezeichnet wird, gemischt werden, welche höher als die gemäß der Norm ISO 4625 gemessene Erweichungstemperatur des kohlenwasserstoffhaltigen Harzes ist;
b) anschließend wird dem so hergestellten Masterbatch mindestens ein Vernetzungssystem beigemischt, indem das Ganze in demselben Mischer oder in einem anderen Mischer bei einer Temperatur oder bis zu einer Temperatur gemischt wird, welche niedriger als 100 °C gehalten wird, zur Gewinnung der selbstdichtenden Zusammensetzung;
c) in Gegenwart von 0 bis weniger als 30 pce Füllstoff, wobei ein solcher optionaler Füllstoff im Verlaufe des Schrittes (a) oder des Schrittes (b) zugegeben wird.

2. Verfahren nach Anspruch 1, wobei im Verlaufe des Schrittes a) des Warmmischens das Dienelastomer mit dem kohlenwasserstoffhaltigen Harz im festen Zustand in Kontakt gebracht wird.

3. Verfahren nach Anspruch 1, wobei im Verlaufe des Schrittes a) des Warmmischens das Dienelastomer mit dem kohlenwasserstoffhaltigen Harz im flüssigen Zustand in Kontakt gebracht wird.

4. Verfahren nach Anspruch 3, wobei das kohlenwasserstoffhaltige Harz im flüssigen Zustand in den Mischer eingespritzt wird.

5. Verfahren nach einem der Ansprüche 1 bis 4, wobei der Schritt a) des Warmmischens des Dienelastomers mit dem kohlenwasserstoffhaltigen Harz unter Ausschluss von Sauerstoff durchgeführt wird.

6. Verfahren nach einem der Ansprüche 1 bis 5, wobei die Temperatur des Warmmischens höher als 70 °C, vorzugsweise höher als 80 °C ist.

7. Verfahren nach einem der Ansprüche 1 bis 6, wobei der Schritt a) des Warmmischens in einem Mischschneckenextruder durchgeführt wird.

8. Verfahren nach einem der Ansprüche 1 bis 7, wobei die Mischtemperatur von Schritt b) niedriger als 80 °C gehalten wird.

9. Verfahren nach einem der Ansprüche 1 bis 8, wobei die Mischtemperatur von Schritt b) niedriger als die Erweichungstemperatur des kohlenwasserstoffhaltigen Harzes gehalten wird.

10. Verfahren nach einem der Ansprüche 1 bis 9, wobei die Mischtemperatur von Schritt b) niedriger als 50 °C, vorzugsweise niedriger als 40 °C gehalten wird.

11. Verfahren nach einem der Ansprüche 1 bis 10, wobei der Schritt b) des Mischens in einem externen Zylindermischer durchgeführt wird.

12. Verfahren nach Anspruch 11, wobei die Zylinder des externen Mischers auf eine Temperatur abgekühlt werden, die niedriger als 40 °C, vorzugsweise niedriger als 30 °C ist.

13. Verfahren nach einem der Ansprüche 1 bis 12, wobei zwischen den Schritten a) und b) ein Zwischenschritt der Abkühlung des Masterbatch eingeschoben wird, um diesen Letzteren auf eine Temperatur unter 100 °C abzukühlen.

14. Verfahren nach Anspruch 13, wobei die Temperatur der Abkühlung des Masterbatch im Verlaufe des Zwischenschrittes der Abkühlung niedriger als 80 °C ist.

15. Verfahren nach Anspruch 13 oder 14, wobei die Temperatur der Abkühlung des Masterbatch im Verlaufe des Zwischenschrittes der Abkühlung niedriger als die Erweichungstemperatur des kohlenwasserstoffhaltigen Harzes ist.

## Claims

1. Process for manufacturing a self-sealing elastomer composition, said process comprising the following steps (phr meaning parts by weight per one hundred parts of solid elastomer):
a) a masterbatch, comprising at least one solid diene elastomer chosen from the group formed by polybutadienes, natural rubber, synthetic polyisoprenes, butadiene copolymers, isoprene copolymers and blends of these elastomers, and between 30 and 90 phr of a thermoplastic hydrocarbon resin that is solid at 23°C, is firstly manufactured by compounding these various components in a mixer at a temperature or up to a temperature called the "hot compounding" temperature which is above the softening point of the hydrocarbon resin, measured according to the standard ISO 4625; and
b) then at least one crosslinking system is incorporated into the masterbatch thus prepared, by compounding everything in the same mixer or in a different mixer, at a temperature or up to a temperature which is kept below 100°C, in order to obtain said self-sealing composition; and
c) in the presence of 0 to less than 30 phr of filler, such an optional filler being introduced during step (a) or step (b).

2. Process according to Claim 1, in which, during hot compounding step a), the diene elastomer is brought into contact with the hydrocarbon resin in the solid state.

3. Process according to Claim 1, in which, during hot compounding step a), the diene elastomer is brought into contact with the hydrocarbon resin in the liquid state.

4. Process according to Claim 3, in which the hydrocarbon resin is injected in the liquid state into the mixer.

5. Process according to any one of Claims 1 to 4, in which step a) for hot compounding the diene elastomer with the hydrocarbon resin is carried out away from oxygen.

6. Process according to any one of Claims 1 to 5, in which the hot compounding temperature is above 70°C, preferably above 80°C.

7. Process according to any one of Claims 1 to 6, in which the hot compounding step a) is carried out in a compounding screw extruder.

8. Process according to any one of Claims 1 to 7, in which the compounding temperature of step b) is kept below 80°C.

9. Process according to any one of Claims 1 to 8, in which the compounding temperature of step b) is kept below the softening point of the hydrocarbon resin.

10. Process according to any one of Claims 1 to 9, in which the compounding temperature of step b) is kept below 50°C, preferably below 40°C.

11. Process according to any one of Claims 1 to 10, in which the compounding step b) is carried out on a two-roll open mill.

12. Process according to Claim 11, in which the rolls of the open mill are cooled to a temperature below 40°C, preferably below 30°C.

13. Process according to any one of Claims 1 to 12, in which an intermediate step of cooling the masterbatch is inserted between steps a) and b) so as to cool the masterbatch to a temperature below 100°C.

14. Process according to Claim 13, in which the temperature to which the masterbatch is cooled during said intermediate cooling step is below 80°C.

15. Process according to Claim 13 or 14, in which the temperature to which the masterbatch is cooled during said intermediate cooling step is below the softening point of the hydrocarbon resin.
